# EUROPÄISCHE PATENTSCHRIFT

(11) **EP 2 618 954 B1**
(45) Veröffentlichungstag und Bekanntmachung des Hinweises auf die Patenterteilung: **28.12.2016**
(21) Anmeldenummer: 12762268.6
(22) Anmeldetag: 18.09.2012
(51) Int. Cl.: B23B 5/46, B23G 1/34

(54) **GEWINDEWIRBELVORRICHTUNG UND DREHMASCHINE UMFASSEND EINE GEWINDEWIRBELVORRICHTUNG**
THREAD WHIRLING DEVICE AND LATHE COMPRISING A THREAD WHIRLING DEVICE
DISPOSITIF DE FILETAGE À LA VOLÉE, ET TOUR COMPRENANT UN DISPOSITIF DE FILETAGE À LA VOLÉE

(30) Priorität: 18.09.2011 DE 102011082903
(43) Veröffentlichungstag der Anmeldung: 31.07.2013
(73) Patentinhaber: Gildemeister Italiana S.p.A., 24030 Brembate di Sopra (BG) (IT)
(72) Erfinder: RIGOLONE, Franco, I-24010 Ponteranica (IT); ROTA, Renato, I-24030 Carvico (IT); CAVADINI, Marco, I-24040 Suisio (IT); MILESI, Luca, I-24015 San Giovanni Bianco (IT)
(74) Vertreter: MERH-IP Matias Erny Reichl Hoffmann Patentanwälte PartG mbB
(86) Internationale Anmeldenummer: PCT/EP2012/068374
(87) Internationale Veröffentlichungsnummer: WO 2013/038028

(56) Entgegenhaltungen:
- EP-A2- 1 985 397
- DE-A1-102004 009 088
- US-A1- 2008 131 224

## Beschreibung

Die vorliegende Erfindung betrifft eine Gewindewirbelvorrichtung zum Erzeugen eines Gewindes auf einem Werkstück an einer numerisch gesteuerten Drehmaschine mittels eines Gewindewirbelverfahrens, mit einem Halterungsaufbau zum Anbringen der Gewindewirbelvorrichtung an der Drehmaschine, einem an dem Halterungsaufbau gehaltenen Wirbelkopf, der eine Öffnung aufweist und einen oder mehrere Schneiden trägt, die umfänglich am Rand der Öffnung angeordnet sind, einem ersten Antriebsmittel, das dazu eingerichtet ist, den Wirbelkopf rotatorisch um eine erste Rotationsachse anzutreiben, die sich durch die Öffnung erstreckt. Zudem betrifft die vorliegende Erfindung eine numerisch gesteuerte Drehmaschine mit einer Arbeitsspindel zum Aufnehmen eines Werkstücks und zum rotatorischen Antreiben des Werkstücks um eine Spindelachse der Arbeitsspindel und einer Gewindewirbelvorrichtung.

### Hintergrund der Erfindung

Eine gattungsgemäße Gewindewirbelvorrichtung gemäß dem Oberbegriff des Anspruchs 1 ist aus der EP 1 985 397 A2 bekannt. Gattungsgemäße Gewindewirbelvorrichtungen sind dazu eingerichtet, das Gewindewirbelverfahren auszuführen, bei dem das Werkstück mittels einer Arbeitsspindel der Drehmaschine rotatorisch um die Spindelachse der Arbeitsspindel angetrieben wird, während sich das Werkstück durch die Öffnung des Wirbelkopfes erstreckt, der Wirbelkopf zum Erzeugen einer Schnittbewegung mittels des ersten Antriebsmittels rotatorisch um die erste Rotationsachse angetrieben wird, und das Werkstück mittels einer Steuereinrichtung der Drehmaschine derart gesteuert wird, dass es sich relativ zu dem Wirbelkopf in Richtung der Spindelachse bewegt, wobei die Vorschubgeschwindigkeit des Werkstücks relativ zu dem Wirbelkopf in Richtung der Spindelachse und die Rotationsgeschwindigkeit des Werkstücks um die Spindelachse in Abhängigkeit eines zu formenden Gewindeprofils aufeinander eingestellt sind.

Das Gewindewirbeln von Gewinden ist besonders zweckmäßig im Bereich der Medizintechnik, insbesondere bei der Herstellung von Implantaten für die Chirurgie, wie zum Beispiel selbsthemmende Knochenschrauben mit Spezialgewinden. Derartige Schrauben bzw. Elemente mit Spezialgewinde werden z.B. für Implantate im Bereich der Dentalmedizin, bei Wirbelsäulenimplantaten und im Bereich der Orthopädischen Chirurgie als Knochenschrauben benötigt. Hierbei ist der große Vorteil des Gewindewirbelns, dass es ermöglicht wird, auf verhältnismäßig einfache Weise und mit der hohen erforderlichen Genauigkeit Werkstücke aus rostfreiem und zähem Stahl sowie aus Titan und Titanlegierungen zu bearbeiten.

Das gewirbelte Gewindeprofil ist absolut gratfrei - eine äußerst wichtige Anforderung der Medizintechnik - und zeichnet sich durch eine hohe Oberflächenqualität und Formtreue aus. Bei dem Gewindewirbeln kann das Gewinde zudem zeitsparend in einem Durchgang ins volle Material geschnitten werden, wodurch eine hohe Maßgenauigkeit erreicht werden kann. Die Präzision liegt im Toleranzbereich von Hundertstelmillimetern und ist nur durch ein genaues Abstimmen der Parameter Drehzahl der Arbeitsspindel und Vorschub des Wirbelkopfes relativ zu der Arbeitsspindel zu erreichen.

Die gattungsgemäße Gewindewirbelvorrichtung als Werkzeug zum Gewindewirbeln umfasst beispielsweise den Wirbelkopf z.B. mit mehreren Vollhartmetallschneiden bzw. Gewindedrehmeißel zum Gewindewirbeln, die umfänglich um die Öffnung des Wirbelkopfes angeordnet sind. Zum gewünschten Gewindeprofil wird z.B. ein bestimmtes Schneidenprofil errechnet und speziell für dieses gewünschte Gewinde angefertigt. Der Wirbelkopf bzw. dessen Rotationsachse zur Erzeugung der Schnittbewegung wird dann in Bezug auf die Spindelachse im Steigungswinkel des zu schneidenden Gewindes geneigt.

Anschließend wird das Werkstück zwischen den Schneiden des Wirbelkopfes in die Öffnung hinein geschoben, wobei sich meist nur eine Schneide im Einsatz befindet. Der Wirbelkopf dreht bei dem Gewindewirbelverfahren mit hoher Drehzahl und bestimmt damit die Schnittgeschwindigkeit, das Werkstück dreht mit niedriger Drehzahl der Spindel und befindet sich in einem Linearachsbetrieb der Drehmaschine in Richtung der Spindelachse und bestimmt den Vorschub in Richtung der Spindelachse, beziehungsweise die Gewindesteigung. Insbesondere beeinflusst die Abstimmung von Vorschubgeschwindigkeit und Drehzahl der Spindel die Gewindesteigung des Gewindes.

Die Spindelgeschwindigkeiten liegen bei dem Gewindewirbeln von Gewinden für die Medizintechnik zumeist im Bereich von etwa 15 bis 20 Umdrehungen pro Minute, wobei die Vorschubgeschwindigkeit dann in Abhängigkeit der gewünschten Gewindesteigung einzustellen ist, d.h. genau durch eine Steigung pro einer Umdrehung der Spindel (Bei Gewinden kennzeichnet die Steigung die Ganghöhe, das heißt den Abstand zwischen zwei Gewindestufen entlang der Gewindeachse, oder anders gesagt den axialen Weg, der durch eine Umdrehung des Gewindes zurückgelegt wird).

Bei den gattungsgemäßen Gewindewirbelvorrichtungen ist es vorgesehen, ein Antriebsmittel an der Gewindewirbelvorrichtung bereitzustellen, mittels dem die Rotationsbewegung des Wirbelkopfes bei hoher Drehzahl zum Erzeugen der Schnittbewegung angetrieben werden kann. Dieses Antriebsmittel kann entweder als indirekter Antrieb oder auch als direkter Antrieb bereitgestellt werden, wie es vorteilhaft in der EP 1985 397 A2 gelehrt wird.

Jedoch ist es bei gattungsgemäßen Gewindewirbelvorrichtungen stets vorgesehen, dass der Neigungswinkel des Wirbelkopfes, der zum Erreichen der für die Medizintechnik erforderlichen Genauigkeit des Gewindes genau auf die gewünschte Gewindesteigung des gewünschten Gewindeprofils eingestellt werden muss, manuell einzustellen ist. Um die erforderliche Genauigkeit bei dieser Einstellung des Neigungswinkels durch manuelles Einstellen überhaupt zu ermöglichen, ist es erforderlich, komplexe und unzweckmäßig große Übersetzungsmechanismen bereitzustellen, die manuelle Einstellbewegungen in minimale Einstellungsbewegungen übersetzen können. Außerdem wird der Vorteil der äußerst schnellen Bearbeitung des Werkstücks zum Herausarbeiten des Gewindes durch das Verfahren des Gewindewirbelns durch die vorangehende langwierige manuelle Einstellprozedur wieder zunichte gemacht.

Zumeist handelt es sich bei Schrauben für die Medizintechnik nicht um Massenartikel sondern um individuell angefertigte Werkstücke, so dass in der Praxis oftmals vor der Bearbeitung jedes einzelnen Werkstücks eine derartige langwierige manuelle Einstellung erforderlich ist. Dies ist selbst dann der Fall, wenn für eine Serie von Werkstücken hintereinander Werkstücke mit gleichem Gewindeprofil und gleicher Gewindesteigung jedoch unterschiedlichen Nenndurchmessern gewindegewirbelt werden sollen, oder auch, wenn für eine Serie von Werkstücken hintereinander Werkstücke mit gleichem Gewindeprofil und gleichem Nenndurchmesser jedoch unterschiedlichen Gewindesteigungen gewindegewirbelt werden sollen.

Gemäß US 2008/0131224A1 ist ein Gewindewirbelkopf bekannt, der an eine werkzeugtragende Spindel eines Fräs-Bearbeitungszentrums anbringbar ist, und der einen über den Spindelantrieb angetriebenen Gewindeschneider aufweist. Hierbei sind die verfahrbaren Achsen des Bearbeitungszentrums zum Verfahren der den Gewindewirbelkopf haltenden Spindel dazu verwendet, die Bewegungen des Gewindewirbelkopfes relativ zu einem an einem Werkzeugeinspannung eingespannten Werkstück translatorisch in drei Freiheitsgraden als auch in einem Freiheitsgrad rotatorisch in Bezug auf eine Werkstückachse zu steuern. Hierbei ergibt sich jedoch der Nachteil, dass eine Spindel bzw. ein Spindelantrieb des Bearbeitungszentrums zum Antreiben des Gewindewirbelkopfes verwendet werden muss und Achsen des Bearbeitungszentrums zum Steuern des Gewindewirbelkopfes verwendet werden müssen, da der Gewindewirbelkopf keinerlei eigene Antriebsmittel aufweist. Zudem ist ein derartiger Gewindewirbelkopf nicht zur Verwendung an einer Drehmaschine mit werkstücktragender Spindel geeignet, da die Spindel einer Drehmaschine zum Aufnehmen des Werkstücks eingerichtet ist (werkstücktragende Spindel im Gegensatz zu einer werkstücktragenden Spindel einer Fräsmaschine bzw. eines Bearbeitungszentrums), und der Gewindewirbelkopf somit nicht an der Spindel der Drehmaschine aufgenommen werden kann und folglich nicht über die Spindel angetrieben werden kann.

Im Hinblick auf diese vorstehend beschriebenen Nachteile von gattungsgemäßen Gewindewirbelvorrichtungen ist es eine Aufgabe der vorliegenden Erfindung, eine Gewindewirbelvorrichtung bereitzustellen, die es ermöglicht, das Gewindewirbeln von medizinischen Werkstücken bei Beibehaltung oder gar Verbesserung der hohen erforderlichen Genauigkeit in der Medizintechnik effizienter und einfacher zu gestalten, insbesondere bei der Hintereinanderbearbeitung von unterschiedlichen Werkstücken.

### Zusammenfassung der Erfindung

Zur Lösung der vorstehend genannten Aufgabe der vorliegenden Erfindung wird erfindungsgemäß eine Gewindewirbelvorrichtung nach Anspruch 1 und eine numerisch gesteuerte Drehmaschine nach Anspruch 18 vorgeschlagen. Abhängige Ansprüche betreffen bevorzugte Ausführungsbeispiele der vorliegenden Erfindung.

Gemäß einem ersten Aspekt der vorliegenden Erfindung wird eine an einer numerisch gesteuerten Drehmaschine anbringbare Gewindewirbelvorrichtung zum Erzeugen eines Gewindes auf einem an einer werkstücktragenden Spindel aufgenommenen Werkstück an der numerisch gesteuerten Drehmaschine mittels eines Gewindewirbelverfahrens vorgeschlagen, die Folgendes umfasst: einen insbesondere ein- oder mehrstückig aufgebauten Halterungsaufbau zum Anbringen der Gewindewirbelvorrichtung an der Drehmaschine (insbesondere an einem Werkzeugträger der Drehmaschine oder an einem Maschinenkörper der Drehmaschine), einen an dem Halterungsaufbau gehaltenen, insbesondere drehbar gelagerten Wirbelkopf, der eine Öffnung aufweist und einen oder mehrere Schneiden trägt, die umfänglich am Rand der Öffnung angeordnet sind, und ein erstes Antriebsmittel, das dazu eingerichtet ist, den Wirbelkopf rotatorisch um eine erste Rotationsachse anzutreiben (insbesondere unabhängig von einer Spindel der Drehmaschine bzw. unabhängig von einem Spindelantrieb der Drehmaschine), die sich durch die Öffnung erstreckt, durch die es auch vorgesehen ist, dass Werkstück zum Gewindewirbeln einzuschieben, derart, dass das Gewinde mittels der Schneiden bei Rotation der Wirbelkopfes zum Erzeugen der Schnittbewegung ausgeformt werden kann. Hierbei ist der Halterungsaufbau zum Anbringen der Gewindewirbelvorrichtung an der Drehmaschine insbesondere als lösbar befestigbarer Halterungsaufbau ausgebildet, der an einem Werkzeugträger der Drehmaschine oder an einem Maschinenkörper der Drehmaschine ver- und entriegelbar befestigt werden kann.

Die erfindungsgemäße Gewindewirbelvorrichtung ist bei Zusammenwirken mit der Drehmaschine, wenn es an dieser angebracht und insbesondere befestigt bzw. verriegelt ist (insbesondere an einem Werkstückträger oder an einem Maschinenkörper der Drehmaschine), dazu eingerichtet, das Gewindewirbelverfahren auszuführen, bei dem das Werkstück mittels der werkzeugtragenden Arbeitsspindel der Drehmaschine rotatorisch um die Spindelachse der Arbeitsspindel angetrieben wird, während sich das Werkstück durch die Öffnung des Wirbelkopfes erstreckt, der Wirbelkopf zum Erzeugen einer Schnittbewegung mittels des an bzw. in der Gewindewirbelvorrichtung eigens vorgesehenen ersten Antriebsmittels, insbesondere mittels des in der Gewindewirbelvorrichtung integrierten ersten Antriebsmittels, rotatorisch um die erste Rotationsachse angetrieben wird, und das Werkstück mittels einer Steuereinrichtung der Drehmaschine derart gesteuert wird, dass es sich relativ zu dem Wirbelkopf in Richtung der Spindelachse bewegt (insbesondere unabhängig von einer Spindel der Drehmaschine bzw. unabhängig von einem Spindelantrieb der Drehmaschine und auch unabhängig von etwaigen Drehachsantrieben der Drehmaschine).

Die Vorschubgeschwindigkeit des Werkstücks relativ zu dem Wirbelkopf in Richtung der Spindelachse und die Rotationsgeschwindigkeit des Werkstücks um die Spindelachse in Abhängigkeit des zu formenden Gewindes (insbesondere in Abhängigkeit der Gewindesteigung) werden hierbei vorzugsweise in Abhängigkeit des zu formenden Gewindes aufeinander eingestellt. Insbesondere ist die Gewindewirbelvorrichtung vorzugsweise dazu eingerichtet, die Schnittbewegung für das Gewindewirbelverfahren über das an bzw. in der Gewindewirbelvorrichtung eigens vorgesehenen erste Antriebsmittel durch Antreiben der Rotation des Wirbelkopfes zu erzeugen.

Die erfindungsgemäße Gewindewirbelvorrichtung umfasst erfindungsgemäß weiterhin ein an bzw. in der Gewindewirbelvorrichtung eigens vorgesehenes zweites Antriebsmittel, insbesondere ein in der Gewindewirbelvorrichtung integriertes zweites Antriebsmittels, das dazu eingerichtet ist, den Wirbelkopf rotatorisch um eine zweite Rotationsachse anzutreiben, die sich quer zu der ersten Rotationsachse erstreckt, zum Ausrichten eines Winkels zwischen der ersten Rotationsachse und der Spindelachse (insbesondere unabhängig von einer Spindel der Drehmaschine bzw. unabhängig von einem Spindelantrieb der Drehmaschine und auch unabhängig von etwaigen Drehachsantrieben der Drehmaschine), wenn die Gewindewirbelvorrichtung an der Drehmaschine angebracht ist.

Somit liegt der Erfindung die Idee zugrunde, neben dem ersten an bzw. in der Gewindewirbelvorrichtung eigens vorgesehenen Antriebsmittel, das den Wirbelkopf zum Erzeugen der Schnittbewegung um die erste Rotationsachse bei für die Schnittbewegung erforderlichen hohen Drehzahlen rotatorisch antreibt (unabhängig von der Spindel bzw. dem Spindelantrieb der Drehmaschine), ein weiteres zweites an bzw. in der Gewindewirbelvorrichtung eigens vorgesehenes Antriebsmittel vorzusehen, das den Wirbelkopf um eine weitere zweite Rotationsachse drehen kann (unabhängig von der Spindel bzw. dem Spindelantrieb der Drehmaschine und unabhängig von etwaigen Drehachsantrieben der Drehmaschine), so dass die erforderliche Einstellung des Neigungswinkels des Wirbelkopfes bzw. der ersten Rotationsachse zu der Spindelachse der Drehmaschine nunmehr automatisch über das zweite Antriebsmittel erfolgen kann und nicht mehr umständlich und zeitintensiv mechanisch manuell erfolgen muss, wie es im Stand der Technik vorgesehen ist.

Dies ermöglicht es vorteilhaft nicht nur, die Einstellprozedur sehr viel einfacher, genauer und schneller durchführen zu können, sondern ermöglicht es vorteilhaft zudem, die Gewindewirbelvorrichtung kompakter ausgestalten zu können, da es weder erforderlich ist, eine große Skala zum Ablesen der eingestellten Winkelstellung für den manuell einstellenden Bearbeiter bereitzustellen, noch einen komplexen Übersetzungsmechanismus bereitzustellen, der die manuellen mechanischen Einstellbewegungen des Bearbeiters in genauere tatsächliche Winkeleinstellbewegungen übersetzt.

Die wesentliche Verbesserung betreffend die Zeitdauer der Einstellung, die mittels der Erfindung für die Neigungswinkeljustierung ermöglicht werden kann, ist hierbei nicht nur darin zu sehen, dass die benötigte Zeit für die eigentliche Neigungswinkeljustierung durch die Automatisierung wesentlich reduziert werden kann, sondern weiterhin dadurch, dass es nicht mehr - wie noch bei der mechanischen manuellen Justierung - erforderlich ist, dass der Bearbeiter für die Winkeljustierung in den Bearbeitungsraum der Drehmaschine hineinreichen muss. Durch Öffnungen des Bearbeitungsraums für derartige manuelle Justierungen an der Gewindewirbelvorrichtung war es aus Sicherheitsgründen immer erforderlich, die Drehmaschine in einen absoluten Haltzustand zubringen, um die Justierung durchführen zu können, wobei der Bearbeitungsraum erst geöffnet werden konnte, wenn die Maschine den Haltzustand erreicht hatte. Bei der erfindungsgemäßen automatisierten Justierung mittels des zweiten Antriebsmittels ist es jedoch vorteilhaft möglich, den Bearbeitungsraum geschlossen zu halten, und sogar weitere automatische Schritte an der Drehmaschine gleichzeitig mit der Justierung durchzuführen. So ist es zum Beispiel vorteilhaft nun ermöglicht, zeitgleich zu der Justierung des Neigungswinkels des Wirbelkopfes ein Werkstück an der Spindel auszuwechseln, wenn die Drehmaschine eine automatische Werkstückwechselvorrichtung umfasst, wodurch sich eine weitere signifikante Effizienzverbesserung ergibt.

Mittels des erfindungsgemäßen zweiten Antriebsmittel wird die Einstellungsmöglichkeit des Neigungswinkels somit auf besonders zweckmäßige Weise automatisiert und kann wesentlich einfacher, wesentlich effizienter, wesentlich genauer, und wesentlich schneller erfolgen und es ist weiterhin denkbar sogar eine kontinuierliche Nachjustierung während der Bearbeitung des Werkstücks bereitzustellen, z.B. um einen Verschleiß der Schneiden beim Gewindewirbeln zu kompensieren, um noch höhere Genauigkeitswerte bezüglich des Gewindes über die gesamte Länge des Gewindes zu ermöglichen.

Vorzugsweise erstreckt sich die zweite Rotationsachse im Wesentlichen senkrecht zu der ersten Rotationsachse. Dies hat den Vorteil, dass die erste Rotationsachse in einer Ebene genau ausgerichtet werden kann.

Vorzugsweise schneiden sich die erste Rotationsachse und die zweite Rotationsachse in einem gemeinsamen Schnittpunkt. Vorzugsweise weisen die einen oder mehreren Schneiden des Wirbelkopfes eine Schneidausrichtung auf, die für jede der Schneiden mit dem gemeinsamen Schnittpunkt der ersten Rotationsachse und der zweiten Rotationsachse ausgerichtet ist. Dies hat den weiteren Vorteil, dass die Achsbewegungsrichtung der relativen Bewegung zwischen Spindel und Gewindewirbelvorrichtung nicht an die Ausrichtung des Wirbelkopfes um die zweite Rotationsachse angepasst werden muss.

Vorzugsweise umfasst die Gewindewirbelvorrichtung weiterhin ein Schnittstellenmittel, das dazu eingerichtet ist, mit der Steuereinrichtung der Drehmaschine verbunden zu werden, wobei das zweite Antriebsmittel vorzugsweise dazu eingerichtet ist, über das verbundene Schnittstellenmittel durch die Steuereinrichtung der Drehmaschine gesteuert zu werden. Dies hat den Vorteil, dass die Steuerung des zweiten Antriebsmittels effizient über die gleiche Steuereinrichtung gesteuert werden kann, wie die anderen Funktionen der numerisch steuerbaren Drehmaschine. Hierbei kann die Steuereinrichtung der Drehmaschine insbesondere eine numerische Steuerung der Drehmaschine (auch NC genannt, für Numerical Controller) und/oder eine speicherprogrammierbare Steuerung (auch SPS oder PLC für Programmable Logic Controller) umfassen, wobei das Schnittstellenmittel dann mit numerischen Steuerung und/oder der speicherprogrammierbaren Steuerung verbunden werden.

Vorzugsweise umfasst die Gewindewirbelvorrichtung, weiterhin ein Schnittstellenmittel, das dazu eingerichtet ist, mit einer elektronischen Steuereinrichtung verbunden zu werden, wobei das zweite Antriebsmittel vorzugsweise dazu eingerichtet ist, über das verbundene Schnittstellenmittel durch die elektronischen Steuereinrichtung gesteuert zu werden.

Vorzugsweise umfasst die Gewindewirbelvorrichtung weiterhin eine elektronische Steuereinrichtung, wobei das zweite Antriebsmittel dazu eingerichtet ist, durch die elektronischen Steuereinrichtung gesteuert zu werden. Somit kann eine eigene elektronische Steuereinrichtung vorgesehen werden. Dies hat den Vorteil, dass die erfindungsgemäße Gewindewirbelvorrichtung neben der Verwendbarkeit für numerisch gesteuerte Drehmaschinen auch an mechanischen Drehmaschinen verwendet werden kann oder an numerisch gesteuerten Drehmaschinen, die keine Funktionalität aufweisen, die eigene Steuereinrichtung an Schnittstellenmittel von unabhängigen steuerbaren Zusatzeinheiten anzuschließen. Vorzugsweise umfasst die elektronische Steuereinrichtung der Gewindewirbelvorrichtung ein Schnittstellenmittel, das dazu eingerichtet ist, mit der Steuereinrichtung der Drehmaschine verbunden zu werden. Dann kann die Steuerung der Drehmaschine und die Steuerung der Gewindewirbelvorrichtung vorteilhaft auf einander abgestimmt werden, da die Steuereinrichtungen verbunden werden können.

Vorzugsweise ist das zweite Antriebsmittel dazu eingerichtet, durch die sie steuernde Steuereinrichtung auf Grundlage einer manuellen Eingabe eines Benutzers und/oder auf Grundlage von in einem CNC-Programm enthaltenen Steuerbefehlen gesteuert zu werden.

Vorzugsweise umfasst das zweite Antriebsmittel zum rotatorischen Antreiben des Wirbelkopfes um die zweite Rotationsachse einen hochpräzisen Elektromotor, insbesondere vorzugsweise einen Servomotor. Dieser ist vorteilhaft dazu eingerichtet, das zweite Antriebsmittel auf Grundlage von genau einstellbaren elektrischen Signalen anzutreiben und die Justierung der Winkelausrichtung des Wirbelkopfes besonders genau und effizient durchzuführen.

Vorzugsweise umfasst das zweite Antriebsmittel ein Klemmmittel, insbesondere ein automatisch steuerbares Klemmmittel, das dazu eingerichtet ist, den mittels des zweiten Antriebsmittels ausgerichteten Winkel zwischen der ersten Rotationsachse und der Spindelachse während des Gewindewirbelverfahrens zu arretieren. Dies ermöglicht es vorteilhaft, die eingestellte Ausrichtung der Winkelneigung des Wirbelkopfes während des eigentlichen Gewindewirbelns arretieren zu können, um eine Verstellung aufgrund der auftretenden Schnittkräfte vermeiden zu können.

Vorzugsweise umfasst das zweite Antriebsmittel einen Winkelpositionssensor, der dazu eingerichtet ist, eine Winkelposition einer Ausrichtung des Wirbelkopfes in Bezug auf die Drehung um die zweite Rotationsachse zu ermitteln. Vorzugsweise ist der Winkelpositionssensor für eine Regelung des zweiten Antriebsmittels dazu eingerichtet, ein die ermittelte Winkelposition angebendes Ausgangssignal an die das zweite Antriebsmittel steuernde Steuervorrichtung auszugeben. Dies ermöglicht vorteilhaft eine noch wesentlich genauere Winkeljustierung, da die Winkelausrichtung des Wirbelkopfes nicht nur gesteuert, sondern mittels eines Regelkreises sogar geregelt werden kann.

Vorzugsweise ist das zweite Antriebsmittel dazu eingerichtet, den Wirbelkopf aus einer Standardausrichtung bis zu einer ersten Maximalwinkelausrichtung in einer ersten Drehrichtung um die zweite Rotationsachse auszurichten und/oder aus der Standardausrichtung bis zu einer zweiten Maximalwinkelausrichtung in einer zweiten, der ersten Drehrichtung entgegengesetzten Drehrichtung um die zweite Rotationsachse auszurichten, insbesondere vorzugsweise bis zu +15° und/oder-15° in Bezug auf die Standardausrichtung.

Vorzugsweise ist die Gewindewirbelvorrichtung derart an der Drehmaschine anbringbar, dass die erste Rotationsachse bei Standardausrichtung des Wirbelkopfes parallel, insbesondere koaxial, mit der Spindelachse der Drehmaschine ausgerichtet ist.

Vorzugsweise umfasst das zweite Antriebsmittel einen Getriebemechanismus. Vorzugsweise umfasst der Getriebemechanismus einen Kegelradgetriebemechanismus, einen Schneckengetriebemechanismus und/oder einen Stirnradmechanismus. Dies ermöglicht es, je nach Bauweise, einen Getriebemechanismus vorzusehen, der eine Richtungsübersetzung ermöglicht. Somit sind die Freiheitsgrade bei dem Einbau des zweiten Antriebsmittels höher und können noch besser an Kompaktheitsanforderungen angepasst werden.

Gemäß einem zweiten Aspekt der Erfindung wird eine numerisch gesteuerte Drehmaschine vorgeschlagen, mit einer Arbeitsspindel zum Aufnehmen eines Werkstücks und zum rotatorischen Antreiben des Werkstücks um eine Spindelachse der Arbeitsspindel, und einer Gewindewirbelvorrichtung nach dem vorstehend beschriebenen ersten Aspekt oder einer der beschriebenen bevorzugten Ausführungen. Die Drehmaschine umfasst vorzugsweise eine Steuereinrichtung zum numerischen Steuern der Drehmaschine und der Gewindewirbelvorrichtung. Hierbei wird insbesondere auf die bereits vorstehend genannten Vorteile verwiesen.

Die Steuereinrichtung ist vorzugsweise dazu eingerichtet, einen Winkel zwischen der Spindelachse und der ersten Rotationsachse durch Steuern des zweiten Antriebsmittels auszurichten. Besonders zweckmäßig sind hierbei die folgend beschriebenen Ausrichtungs- bzw. Einstellungsmöglichkeiten:

Vorzugsweise ist die Steuereinrichtung dazu eingerichtet, einen Winkel zwischen der Spindelachse und der ersten Rotationsachse durch Steuern des zweiten Antriebsmittels auszurichten, um eine Ausrichtung der ersten Rotationsachse bei Maschineneinrichtung auf Grundlage eines vorgesehenen theoretischen Gewindeprofils einzustellen. Diese Ausführungsform ermöglicht es in Verbindung mit den bereits genannten Vorteilen, die Justierung bei Maschineneinrichtung der Drehmaschine automatisiert vornehmen zu können.

Vorzugsweise ist die Steuereinrichtung dazu eingerichtet, einen Winkel zwischen der Spindelachse und der ersten Rotationsachse durch Steuern des zweiten Antriebsmittels anzupassen, um einen bei der Bearbeitung des Werkstücks aufgrund von Scheidenverschleiß auftretenden Gewindefehler zu kompensieren. Dies hat den Vorteil, dass noch wesentlich bessere Genauigkeiten erreicht werden können, da selbst ein Scheidenverschleiß im µm-Bereich kompensiert werden kann, was manuell nicht möglich ist. Eine derartige Verbesserung der Genauigkeit ist insbesondere für Gewinde für Teile aus der Medizintechnik höchst vorteilhaft.

Vorzugsweise ist die Steuereinrichtung dazu eingerichtet, einen Winkel zwischen der Spindelachse und der ersten Rotationsachse durch Steuern des zweiten Antriebsmittels nach Herausarbeiten eines Gewindes auf einem ersten Werkstück und vor dem Herausarbeiten eines Gewindes mit gleichem Gewindeprofil und gleicher Gewindesteigung auf einem zweiten Werkstück auf Grundlage eines Unterschieds zwischen den Nenndurchmessern des ersten und des zweiten Werkstücks einzustellen.

Vorzugsweise ist die Steuereinrichtung dazu eingerichtet, einen Winkel zwischen der Spindelachse und der ersten Rotationsachse durch Steuern des zweiten Antriebsmittels nach Herausarbeiten eines Gewindes auf einem ersten Werkstück und vor dem Herausarbeiten eines Gewindes mit gleichem Gewindeprofil auf einem zweiten Werkstück mit gleichem Nenndurchmesser auf Grundlage eines Unterschieds zwischen den Gewindesteigungen der Gewinde des ersten und des zweiten Werkstücks einzustellen. Dies hat den Vorteil, dass selbst in der Medizintechnik übliche Gruppen von Gewindeteilen, deren Gewindeprofile und Nenndurchmesser gleich sein sollen, aber unterschiedliche Steigungen aufweisen sollen, auf besonders einfache Weise, äußerst genau und höchst zeiteffizient hintereinander hergestellt werden können, da die Justierung des Neigungswinkels durch die automatische Steuerung zwischen der Bearbeitung der Werkstücke anhand nur des einen Parameters des Unterschieds der Steigungen eingestellt werden kann.

Zusammenfassend ermöglicht es die vorliegende Erfindung vorteilhaft, eine Gewindewirbelvorrichtung für eine Drehmaschine und eine Drehmaschine mit Gewindewirbelvorrichtung bereitzustellen, die es ermöglicht, das Gewindewirbeln von medizinischen Werkstücken bei Beibehaltung oder gar Verbesserung der hohen erforderlichen Genauigkeit in der Medizintechnik wesentlich effizienter und einfacher zu gestalten, insbesondere bei der Hintereinanderbearbeitung von unterschiedlichen Werkstücken.

### Kurzbeschreibung der Figuren

Fig. 1 zeigt beispielhaft eine schematische Darstellung einer Perspektivansicht einer Gewindewirbelvorrichtung gemäß einem bevorzugten Ausführungsbeispiel der vorliegenden Erfindung.
Fig. 2 zeigt beispielhaft eine schematische Darstellung einer Schnittansicht der Gewindewirbelvorrichtung gemäß Fig. 1.
Fig. 3 zeigt beispielhaft eine weitere schematische Darstellung einer Schnittansicht eines Abschnitts der Gewindewirbelvorrichtung gemäß Fig. 1.
Figs. 4A und 4B zeigen beispielhaft eine Vorderansicht und eine Schnittansicht eines Abschnitts eines Wirbelkopfs.
Fig. 5 zeigt beispielhaft eine schematische Darstellung einer numerisch gesteuerten Drehmaschine mit einer angebrachten Gewindewirbelvorrichtung gemäß einem bevorzugten Ausführungsbeispiel der vorliegenden Erfindung.

### Ausführliche Beschreibung bevorzugter

### Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

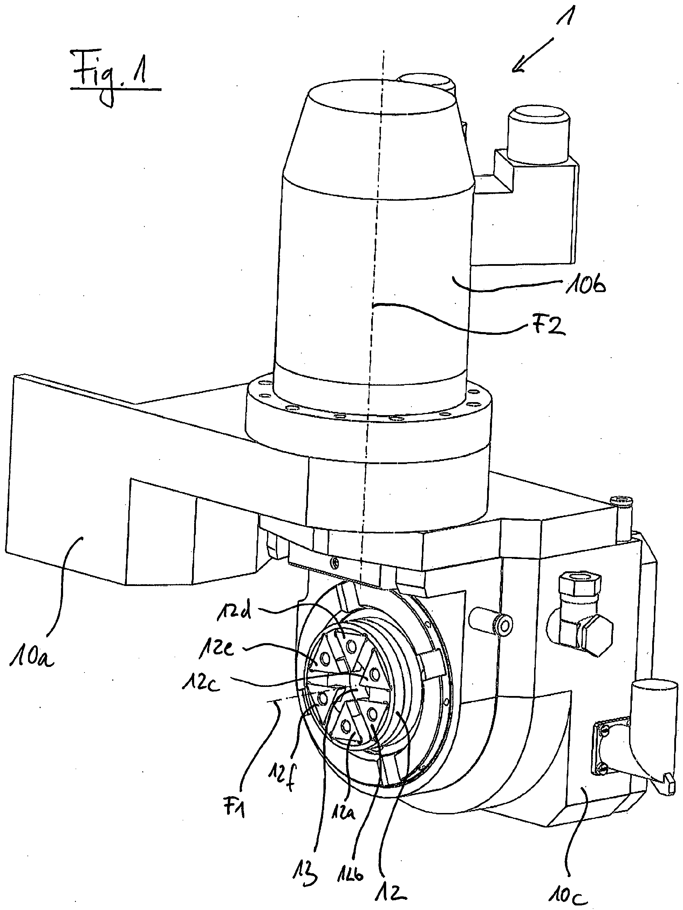

**Fig. 1** zeigt beispielhaft eine schematische Darstellung einer Perspektivansicht einer Gewindewirbelvorrichtung 1 gemäß einem bevorzugten Ausführungsbeispiel der vorliegenden Erfindung. Die Gewindewirbelvorrichtung 1 ist an einer Drehmaschine anbringbar über einen Halterungsabschnitt 10a eines Halterungsaufbaus der Gewindewirbelvorrichtung 1, der weiterhin einen Antriebsgehäuseabschnitt 10b und einen Wirbelkopfhalterungsabschnitt 10c umfasst. An dem Wirbelkopfhalterungsabschnitt 10c ist ein um eine Rotationsachse F1 drehbar gelagerter Wirbelkopf 12 gehalten, der zum Gewindewirbeln zur Erzeugung der Schnittbewegung bei hohen Drehzahlen um die Rotationsachse F1 angetrieben wird.

Die Rotationsachse F1 erstreckt sich axial durch eine runde Öffnung 13 des Wirbelkopfes 12 auf der Vorderseite der Gewindewirbelvorrichtung 1, die zum Gewindewirbeln einer Spindel der Drehmaschine zugewandt sein soll. Umfänglich am inneren Rand der Öffnung 13 sind gleichmäßig eine Mehrzahl von Schneiden 12a bis 12f angeordnet.

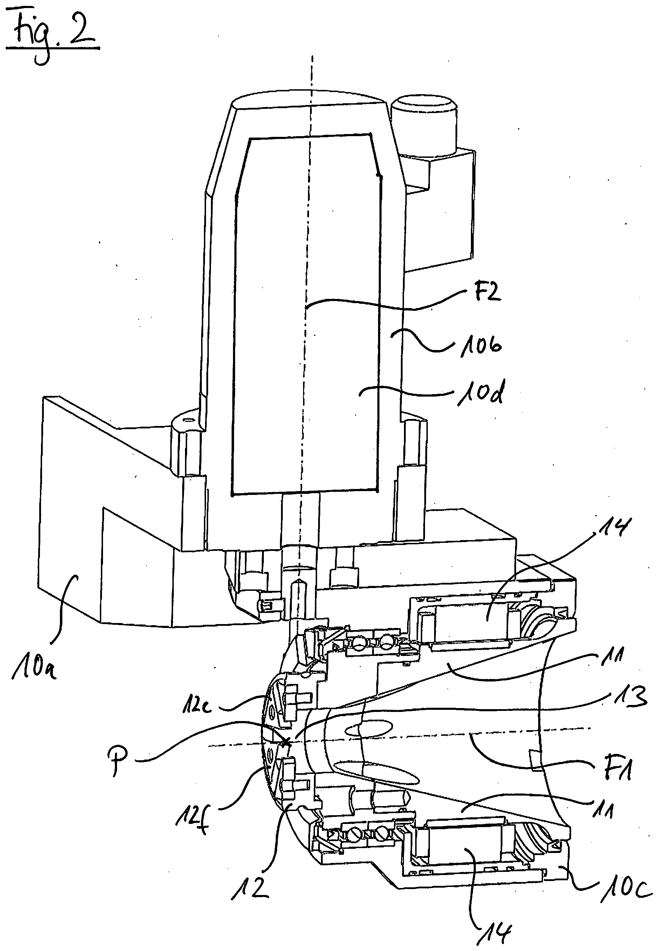

**Fig. 2** **zeigt** beispielhaft eine schematische Darstellung einer Schnittansicht der Gewindewirbelvorrichtung 1 gemäß **Fig. 1****.** Der Wirbelkopf 12 umfasst einen Hohlkegelabschnitt 11, an dessen engerem Ende die Öffnung 13 angeordnet ist. Zum Antreiben des Wirbelkopfes um die Rotationsachse ist beispielhaft ein kompakter Direktantrieb 14 als erstes Antriebsmittel im Sinne der Erfindung vorgesehen, wie er in der EP 1 985 397 A2 gelehrt wird. Die Erfindung ist jedoch nicht auf derartige besonders zweckmäßige kompakte Direktantriebe zur Verwirklichung des ersten Antriebsmittels beschränkt, sondern kann in anderen zweckmäßigen Ausführungsformen auch über einen indirekten Antrieb umfassend einen Getriebemechanismus angetrieben werden.

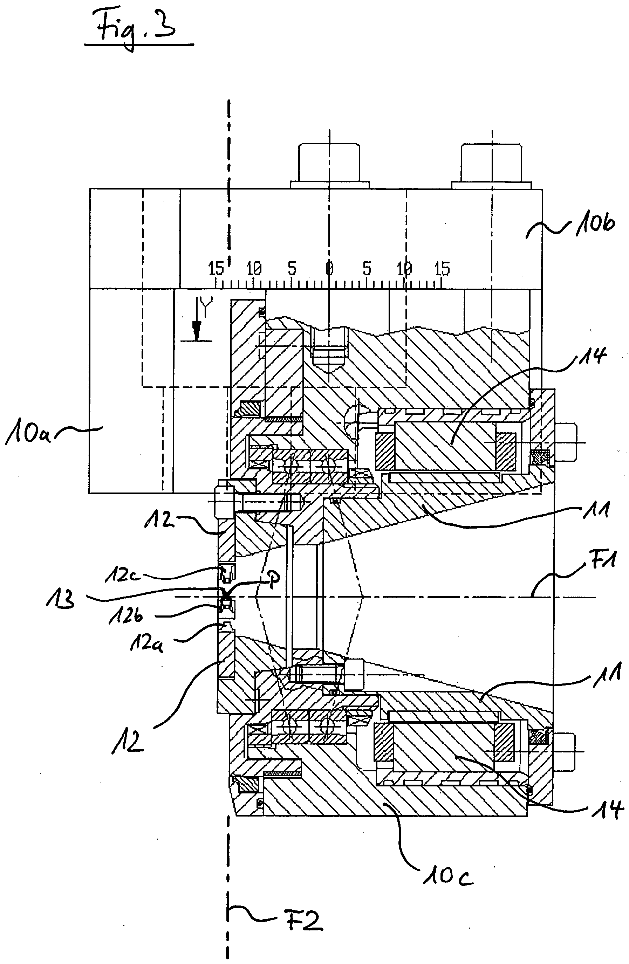

Im Inneren des Antriebsgehäuseabschnitts 10b ist ein Antriebsraum 10d vorgesehen, in dem ein zweites Antriebsmittel bereitgestellt wird, das dazu eingerichtet ist, den Wirbelkopf 12 um eine zweite Rotationsachse F2 zu drehen, um eine automatische Ausrichtung des Neigungswinkels des Wirbelkopfes 12 bzw. der Rotationsachse F1 zu einer Spindel der Drehmaschine im Sinne der Erfindung zu ermöglichen. In diesem Ausführungsbeispiel sind die Rotationsachsen F1 und F2 beispielhaft senkrecht bereitgestellt und zudem schneiden sich die Rotationsachsen in diesem Ausführungsbeispiel beispielhaft in einem gemeinsamen Schnittpunkt P, der zentral in der Öffnung 13 und in einer Anordnungsebene der Schneiden 12a bis 12f angeordnet ist. Insbesondere zeigen die Ausrichturigsrichtungen der Schneiden 12a bis 12f radial nach Innen hin zu dem Schnittpunkt P der Rotationsachsen F1 und F2. Dies ist noch besser in Fig. 3 zu erkennen, die beispielhaft eine weitere schematische Darstellung einer Schnittansicht des Winkelkopfabschnitts der Gewindewirbelvorrichtung 1 gemäß Fig. 1 zeigt.

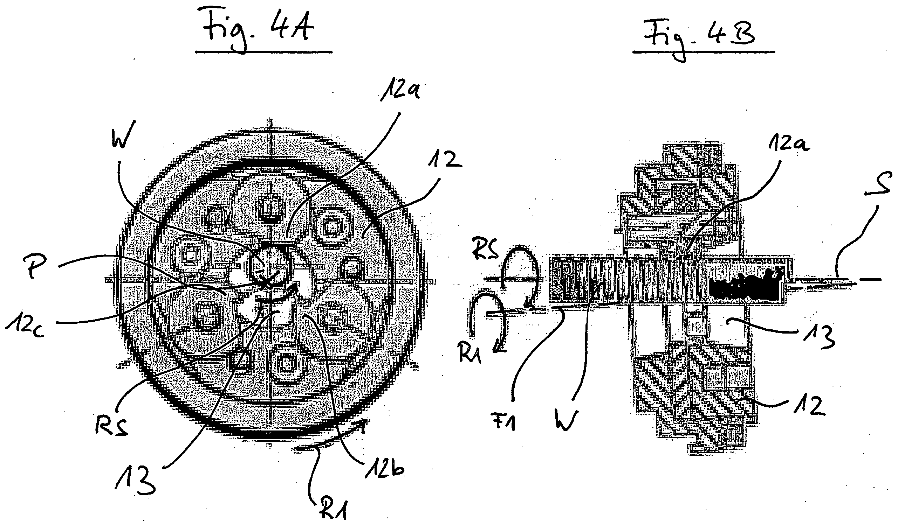

**Figs. 4A** und **4B** zeigen beispielhaft eine Vorderansicht und eine Schnittansicht eines Abschnitts eines Wirbelkopfs beim Gewindewirbeln. Hier sind beispielhaft nur drei Schneiden 12a bis 12c vorgesehen, wobei jeweils nur eine zu einem Zeitpunkt (hier Schneide 12a) einen Schnitt an dem Werkstück W durchführt, wenn dieses leicht zu dem axialen Punkt P zwischen den Schneiden, an dem sich die Rotationsachsen F1 und F2 schneiden, versetzt in die Öffnung 13 eingeschoben ist.

Die Pfeile RS kennzeichnen eine Werkzeugrotationsbewegung um die Spindelachse S (angetrieben durch die nicht abgebildete Spindel der Drehmaschine) und die Pfeile R1 kennzeichnen die Drehbewegung des Wirbelkopfes 12 mit den Schneiden um die Rotationsachse F1 zum Erzeugen der Schnittbewegung. Beispielhaft sind die Drehrichtungen hier gleichläufig, RS und R1 können aber auch gegenläufig vorgesehen sein. Wie bereits erwähnt, wird durch die Drehbewegung R1 um die Rotationsachse F1 eine Schnittbewegung erzeugt und die Drehbewegung RS des Werkzeugs um die Spindelachse erzeugt das Gewinde, wenn das Werkstück W gleichzeitig und relativ zu dem Wirbelkopf 12 in Richtung der Spindelachse S verfahren wird. Hierbei kommt es auf die Relativbewegung zwischen Spindel und Wirbelkopf 12 in Richtung der Spindelachse und insbesondere auf die relative Vorschubgeschwindigkeit an, jedoch ist es nicht wesentlich, ob die Spindel festgehalten wird und der Wirbelkopf 12 bzw. die Gewindewirbelvorrichtung 1 verfahren wird, oder ob die Spindel selbst verfahren wird.

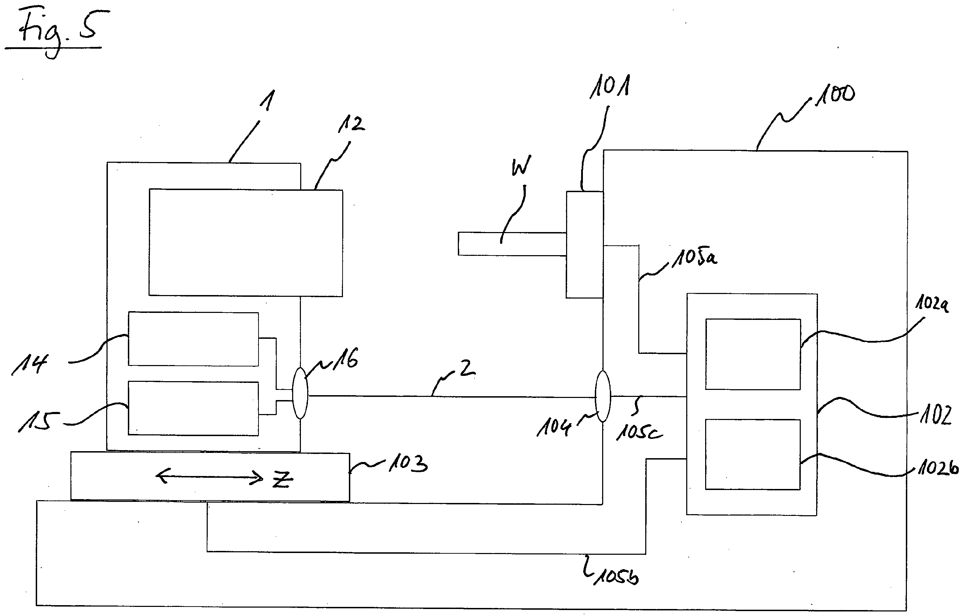

**Fig. 5** zeigt beispielhaft eine schematische Darstellung einer numerisch gesteuerten Drehmaschine 100 mit einer angebrachten Gewindewirbelvorrichtung 1 gemäß einem bevorzugten Ausführungsbeispiel der vorliegenden Erfindung. Die Drehmaschine 100 umfasst eine Arbeitsspindel 101, die ein Werkzeug W hält und dieses rotatorisch um die Spindelachse antreiben kann. Weiterhin umfasst die Drehmaschine 100 eine Steuereinrichtung 102 mit einer numerischen Steuerung 102a (NC) und einer speicherprogrammierbaren Steuerung (SPS oder auch PLC), wobei die Steuereinrichtung 102 die Spindel 101 über Verbindung 105a numerisch steuert.

Zudem ist zum Erzeugen der Vorschubbewegung ein Schlitten 103 einer Linearachse vorgesehen, der in einer Z-Richtung (beispielhaft parallel zur Spindelachse) verfahrbar gelagert ist, wobei der Vorschub des Schlittens 103 über die Verbindung 105b durch die Steuereinrichtung 102 gesteuert wird. An dem Schlitten 103 ist die Gewindewirbelvorrichtung 1 angebracht und kann somit mittels des Schlittens relativ zu der Spindel 101 in Richtung der Spindelachse verfahren werden. Alternativ oder zusätzlich wäre es natürlich möglich, einen verfahrbaren Spindelstock zum Verfahren der Spindel relativ zu der Gewindewirbelvorrichtung vorzusehen.

Neben dem Wirbelkopf 12, für dessen genauere Beschreibung auf die vorhergehenden Beschreibungen verwiesen wird, umfasst die Gewindewirbelvorrichtung ein erstes Antriebsmittel 14 (z.B. mit Direktantrieb oder mit indirektem Antrieb einschließlich einem Getriebemechanismus) zum Antreiben des Wirbelkopfes 12 um die erste Rotationsachse F1 zum Erzeugen der Schnittbewegung (d.h. bei hohen Drehzahlen, z.B. etwa 1500 bis 300 Umdrehungen pro Minute) und ein zweites Antriebsmittel 15 zum Drehen des Wirbelkopfes 12 um die zweite Rotationsachse F2 zum Justieren des Neigungswinkels des Wirbelkopfes 12. Im Unterschied zu dem Hochdrehzahlantrieb 14 ist das zweite Antriebsmittel für wesentlich kleinere Drehgeschwindigkeiten einrichtet und umfasst vorzugsweise einen präzise steuerbaren Servomotor und einen Positionssensor (z.B. Inkrementalgeber) zum Regeln des Servomotors.

Weiterhin umfasst die Gewindewirbelvorrichtung 1 nach diesem Ausführungsbeispiel ein Schnittstellenmittel 16, welches über Verbindung 2, Schnittstellenmittel 104 der Drehmaschine 100 und Verbindung 105c mit der Steuereinrichtung 102 verbindbar ist, so dass die Gewindewirbelvorrichtung 1 und insbesondere die Antriebsmittel 14 und 15 mittels der Steuereinrichtung 102 der Drehmaschine 100 steuerbar bzw. im Falle des Antriebsmittels 15 vorzugsweise sogar regelbar sind. Dies kann entweder durch manuelle Eingabe durch einen Benutzer an der Steuereinrichtung und/oder sogar ganz vollautomatisch über Steuerdaten, wie z.B. ein NC-Programm erfolgen.

Zusammenfassend ermöglicht es die vorliegende Erfindung vorteilhaft, eine Gewindewirbelvorrichtung für eine Drehmaschine und eine Drehmaschine mit Gewindewirbelvorrichtung bereitzustellen, die es ermöglicht, das Gewindewirbeln von medizinischen Werkstücken bei Beibehaltung oder gar Verbesserung der hohen erforderlichen Genauigkeit in der Medizintechnik wesentlich effizienter und einfacher zu gestalten, insbesondere bei der Hintereinanderbearbeitung von unterschiedlichen Werkstücken.

## Patentansprüche

1. Gewindewirbelvorrichtung zum Erzeugen eines Gewindes auf einem Werkstück an einer numerisch gesteuerten Drehmaschine mittels eines Gewindewirbelverfahrens, mit:
- einem Halterungsaufbau (10a, 10b, 10c) zum Anbringen der Gewindewirbelvorrichtung (1) an der Drehmaschine (100),
- einem an dem Halterungsaufbau (10a, 10b, 10c) gehaltenen Wirbelkopf (12), der eine Öffnung (13) aufweist und einen oder mehrere Schneiden (12a - 12f) trägt, die umfänglich am Rand der Öffnung (13) angeordnet sind, und
- einem ersten Antriebsmittel (14), das dazu eingerichtet ist, den Wirbelkopf (12) rotatorisch um eine erste Rotationsachse (F1) anzutreiben, die sich durch die Öffnung (13) erstreckt;
wobei die Gewindewirbelvorrichtung (1) dazu eingerichtet ist, das Gewindewirbelverfahren auszuführen, bei dem:
- das Werkstück (W) mittels einer Arbeitsspindel (101) der Drehmaschine (100) rotatorisch um die Spindelachse der Arbeitsspindel (101) angetrieben wird, während sich das Werkstück (W) durch die Öffnung (13) des Wirbelkopfes (12) erstreckt,
- der Wirbelkopf (12) zum Erzeugen einer Schnittbewegung mittels des ersten Antriebsmittels (14) rotatorisch um die erste Rotationsachse (F1) angetrieben wird, und
- das Werkstück (W) mittels einer Steuereinrichtung der Drehmaschine derart gesteuert wird, dass es sich relativ zu dem Wirbelkopf (12) in Richtung (Z) der Spindelachse bewegt,
wobei die Vorschubgeschwindigkeit des Werkstücks (W) relativ zu dem Wirbelkopf (12) in Richtung der Spindelachse und die Rotationsgeschwindigkeit des Werkstücks (W) um die Spindelachse in Abhängigkeit des zu formenden Gewindes aufeinander eingestellt sind,
**gekennzeichnet durch**
ein zweites Antriebsmittel (15), das dazu eingerichtet ist, den Wirbelkopf (12) rotatorisch um eine zweite Rotationsachse (F2) anzutreiben, die sich quer zu der ersten Rotationsachse (F1) erstreckt, zum Ausrichten eines Winkels zwischen der ersten Rotationsachse (F1) und der Spindelachse, wenn die Gewindewirbelvorrichtung (1) an der Drehmaschine (100) angebracht ist.

2. Gewindewirbelvorrichtung nach Anspruch 1, **dadurch gekennzeichnet, dass** sich die zweite Rotationsachse (F2) im Wesentlichen senkrecht zu der ersten Rotationsachse (F1) erstreckt.

3. Gewindewirbelvorrichtung nach Anspruch 1 oder 2, **dadurch gekennzeichnet, dass** sich die erste Rotationsachse (F1) und die zweite Rotationsachse (F2) in einem gemeinsamen Schnittpunkt schneiden.

4. Gewindewirbelvorrichtung nach Anspruch 3, **dadurch gekennzeichnet, dass** die eine oder mehreren Schneiden des Wirbelkopfes (12) eine Schneidausrichtung (12a, 12b, 12c) aufweisen, die für jede der Schneiden (12a, 12b, 12c) mit dem gemeinsamen Schnittpunkt der ersten Rotationsachse (F1) und der zweiten Rotationsachse (F2) ausgerichtet ist.

5. Gewindewirbelvorrichtung nach einem der vorhergehenden Ansprüche, **gekennzeichnet, durch**
ein Schnittstellenmittel (16), das dazu eingerichtet ist, mit der Steuereinrichtung (102) der Drehmaschine (100) verbunden zu werden, wobei das zweite Antriebsmittel (15) dazu eingerichtet ist, über das verbundene Schnittstellenmittel (16) **durch** die Steuereinrichtung (102) der Drehmaschine gesteuert zu werden;
ein Schnittstellenmittel (16), das dazu eingerichtet ist, mit einer elektronischen Steuereinrichtung verbunden zu werden, wobei das zweite Antriebsmittel (15) dazu eingerichtet ist, über das verbundene Schnittstellenmittel **durch** die elektronischen Steuereinrichtung gesteuert zu werden; oder
eine elektronischen Steuereinrichtung, wobei das zweite Antriebsmittel dazu eingerichtet ist, **durch** die elektronischen Steuereinrichtung gesteuert zu werden, wobei die elektronischen Steuereinrichtung der Gewindewirbelvorrichtung ein Schnittstellenmittel umfasst, das dazu eingerichtet ist, mit der Steuereinrichtung der Drehmaschine verbunden zu werden.

6. Gewindewirbelvorrichtung nach Anspruch 5, **dadurch gekennzeichnet, dass** das zweite Antriebsmittel dazu eingerichtet ist, durch die sie steuernde Steuereinrichtung auf Grundlage einer manuellen Eingabe eines Benutzers und/oder auf Grundlage von in einem CNC-Programm enthaltenen Steuerbefehlen gesteuert zu werden.

7. Gewindewirbelvorrichtung nach einem der vorhergehenden Ansprüche, **dadurch gekennzeichnet, dass** das zweite Antriebsmittel zum rotatorischen Antreiben des Wirbelkopfes (12) um die zweite Rotationsachse (F2) einen Elektromotor, insbesondere einen Servomotor, umfasst.

8. Gewindewirbelvorrichtung nach einem der vorhergehenden Ansprüche, **dadurch gekennzeichnet, dass** das zweite Antriebsmittel ein Klemmmittel umfasst, das dazu eingerichtet ist, den mittels des zweiten Antriebsmittels ausgerichteten Winkel zwischen der ersten Rotationsachse (F1) und der Spindelachse während des Gewindewirbelverfahrens zu arretieren.

9. Gewindewirbelvorrichtung nach einem der vorhergehenden Ansprüche, **dadurch gekennzeichnet, dass** das zweite Antriebsmittel einen Winkelpositionssensor umfasst, der dazu eingerichtet ist, eine Winkelposition einer Ausrichtung des Wirbelkopfes (12) in Bezug auf die Drehung um die zweite Rotationsachse zu ermitteln.

10. Gewindewirbelvorrichtung nach Anspruch 9 in Verbindung mit Anspruch 5, **dadurch gekennzeichnet, dass** der Winkelpositionssensor für eine Regelung des zweiten Antriebsmittels dazu eingerichtet ist, ein die ermittelte Winkelposition angebendes Ausgangssignal an die das zweite Antriebsmittel steuernde Steuervorrichtung auszugeben.

11. Gewindewirbelvorrichtung nach einem der vorhergehenden Ansprüche, **dadurch gekennzeichnet, dass** das zweite Antriebsmittel dazu eingerichtet ist, den Wirbelkopf (12) aus einer Standardausrichtung bis zu einer ersten Maximalwinkelausrichtung in einer ersten Drehrichtung um die zweite Rotationsachse auszurichten und aus der Standardausrichtung bis zu einer zweiten Maximalwinkelausrichtung in einer zweiten, der ersten Drehrichtung entgegengesetzten Drehrichtung um die zweite Rotationsachse auszurichten, insbesondere bis zu +15° und -15° in Bezug auf die Standardausrichtung.

12. Gewindewirbelvorrichtung nach Anspruch 11, **dadurch gekennzeichnet, dass** die Gewindewirbelvorrichtung derart an der Drehmaschine anbringbar ist, dass die erste Rotationsachse (F1) bei Standardausrichtung des Wirbelkopfes (12) parallel, insbesondere koaxial, mit der Spindelachse der Drehmaschine ausgerichtet ist.

13. Eine numerisch gesteuerte Drehmaschine mit:
- einer Arbeitsspindel (101) zum Aufnehmen eines Werkstücks (W) und zum rotatorischen Antreiben des Werkstücks (W) um eine Spindelachse der Arbeitsspindel (101), und
- einer Gewindewirbelvorrichtung (1) nach einem der vorhergehenden Ansprüche.

14. Drehmaschine nach Anspruch 13, **gekennzeichnet, durch** eine Steuereinrichtung (102) zum numerischen Steuern der Drehmaschine (100) und der Gewindewirbelvorrichtung (1), wobei die Steuereinrichtung dazu eingerichtet ist, einen Winkel zwischen der Spindelachse und der ersten Rotationsachse (F1) **durch** Steuern des zweiten Antriebsmittels auszurichten.

15. Drehmaschine nach Anspruch 14, **dadurch gekennzeichnet, dass**
die Steuereinrichtung dazu eingerichtet ist, einen Winkel zwischen der Spindelachse und der ersten Rotationsachse (F1) durch Steuern des zweiten Antriebsmittels anzupassen, um,einen bei der Bearbeitung des Werkstücks aufgrund von Scheidenverschleiß auftretenden Gewindefehler zu kompensieren;
die Steuereinrichtung dazu eingerichtet ist, einen Winkel zwischen der Spindelachse und der ersten Rotationsachse (F1) durch Steuern des zweiten Antriebsmittels nach Herausarbeiten eines Gewindes auf einem ersten Werkstück und vor dem Herausarbeiten eines Gewindes mit gleichem Gewindeprofil und gleicher Gewindesteigung auf einem zweiten Werkstück auf Grundlage eines Unterschieds zwischen den Nenndurchmessern des ersten und des zweiten Werkstücks einzustellen; und/oder
die Steuereinrichtung dazu eingerichtet ist, einen Winkel zwischen der Spindelachse und der ersten Rotationsachse (F1) durch Steuern des zweiten Antriebsmittels nach Herausarbeiten eines Gewindes auf einem ersten Werkstück und vor dem Herausarbeiten eines Gewindes mit gleichem Gewindeprofil auf einem zweiten Werkstück mit gleichem Nenndurchmesser auf Grundlage eines Unterschieds zwischen den Gewindesteigungen der Gewinde des ersten und des zweiten Werkstücks einzustellen.

## Claims

1. A thread whirling device for producing a thread on a workpiece on, a numerically controlled lathe by means of a thread whirling method, comprising:
- a retention structure (10a, 10b, 10c) for mounting the thread whirling device (1) on the lathe (100),
- a whirling head (12) which is retained on the retention structure (10a, 10b, 10c), has an opening (13) and carries one or more cutters (12a - 12f) which are arranged peripherally on the edge of the opening (13), and
- a first drive means (14) configured to drive the whirling head (12) in a rotational manner about a first rotation axis (F1) expending through the opening (13);
the thread whirling device (1) being configured to carry out the thread whirling method, wherein:
- the workpiece (W) is driven in a rotational manner about the spindle axis of an work spindle (101) by means of the work spindle (101) of the lathe (100), whilst the workpiece (W) extends through the opening (13) of the whirling head (12),
- the whirling head (12) is driven rotationally about the first rotation axis (F1) by means of the first drive means (14) in order to generate a cutting movement, and
- the workpiece (W) is controlled by means of a control device of the lathe such that it moves relative to the whirling head (12) in the direction (Z) of the spindle axis,
the feed speed of the workpiece (W) relative to the whirling head (12) in the direction of the spindle axis and the rotation speed of the workpiece (W) about the spindle axis being adjusted with respect to each other in accordance with the thread to be formed,
**characterized by**
a second drive means (15) configured to drive the whirling head (12) in a rotational manner about a second rotation axis (F2) which extends transversely relative to the first rotation axis (F1), in order to orientate an angle between the first rotation axis(F1) and the spindle axis when the thread whirling device (1) is mounted on the lathe (100).

2. The thread whirling device according to claim 1, **characterized in that** the second rotation axis (F2) extends substantially perpendicularly with respect to the first rotation axis (F1).

3. The thread whirling device according to claim 1 or 2, **characterized in that** the first rotation axis (F1) and the second rotation axis (F2) intersect at a common intersection point.

4. The thread whirling device according to claim 3, **characterized in that** the one or more cutters of the whirling head (12) have a cutting orientation (12a, 12b, 12c) which, for each of the cutters (12a, 12b, 12c), is orientated with the common intersection point of the first rotation axis (F1) and the second rotation axis (F2).

5. The thread whirling device according to one of the preceding claims, **characterized by**
an interface means (16) configured to be connected to the control device (102) of the lathe (100), the second drive means (15) being configured to be controlled by the control device (102) of the lathe by means of the connected interface means (16);
an interface means (16) configured to be connected to an electronic control device, the second drive means (15) being configured to be controlled by the electronic control device by means of the connected interface means; or
an electronic control device, the second drive means being configured to be controlled by means of the electronic control device, wherein the electronic control device of the thread whirling device comprises an interface means configured to be connected to the control device of the lathe.

6. The thread whirling device according to claim 5, **characterized in that** the second drive means is configured to be controlled by means of the control device which controls it based on a manual input by a user and/or based on control commands contained in a CNC programme.

7. The thread whirling device according to one of the preceding claims, **characterized in that** the second drive means comprises an electric motor, in particular a servomotor, for rotatably driving the whirling head (12) about the second rotation axis (F2).

8. The thread whirling device according to one of the preceding claims, **characterized in that** the second drive means comprises a clamping means configured to lock the angle orientated by means of the second drive means between the first rotation axis (F1) and the spindle axis during the thread whirling method.

9. The thread whirling device according to one of the preceding claims, **characterized in that** the second drive means comprises an angular position sensor configured to determine an angular position of an orientation of the whirling head (12) with respect to the rotation about the second rotation axis.

10. The thread whirling device according to claim 9 in conjunction with claim 5, **characterized in that** the angular position sensor, for closed loop control of the second drive means, is configured to transmit an output signal indicating the determined angular position to the control device controlling the second drive means.

11. The thread whirling device according to one of the preceding claims, **characterized in that** the second drive means is configured to orientate the whirling head (12) from a standard orientation up to a first maximum angular orientation in a first rotation direction about the second rotation axis, and from the standard orientation up to a second maximum angular orientation in a second rotation direction opposite to the first rotation direction about the second rotation axis, in particular up to + 15° and -15° with respect to the standard orientation.

12. The thread whirling device according to claim 11, **characterized in that** the thread whirling device can be mounted on the lathe such that the first rotation axis (F1), at standard orientation of the whirling head (12), is orientated parallel to, in particular coaxial with, the spindle axis of the lathe.

13. A numerically controlled lathe comprising:
a work spindle (101) for receiving a workpiece (W) and for rotationally driving the workpiece (W) about a spindle axis of the work spindle (101), and
a thread whirling device (1) according to one of the preceding claims.

14. The lathe according to claim 13, **characterized by** a control device (102) for numerically controlling the lathe (100) and the thread whirling device (1), wherein the control device is configured to orientate an angle between the spindle axis and the first rotation axis (F1) by controlling the second drive means,

15. The lathe according to claim 14, **characterized in that**
the control device is configured to adjust an angle between the spindle axis and the first rotation axis (F1) by controlling the second drive means in order to compensate for a thread error which occurs due to cutter wear when the workpiece is processed;
the control device is configured to adjust an angle between the spindle axis and the first rotation axis (F1) by controlling the second drive means after forming a thread on a first workpiece and before forming a thread having the same thread profile and the same thread pitch on a second workpiece on the basis of a difference between the nominal diameters of the first and second workpieces; and/or
the control device is configured to adjust an angle between the spindle axis and the first rotation axis (F1) by controlling the second drive means after forming a thread on a first workpiece and before forming a thread having the same thread profile on a second workpiece having the same nominal diameter on the basis of a difference between the thread pitches of the threads of the first and the second workpieces.

## Revendications

1. Dispositif de filetage à la volée pour réaliser un filetage sur une pièce à oeuvrer sur un tour à commande numérique au moyen d'un procédé de filetage à la volée, comportant :
- une structure de support (10a, 10b, 10c) pour monter le dispositif de filetage à la volée (1) sur le tour (100),
- une tête (12) supportée sur la structure de support (10a, 10b, 10c) et présentant une ouverture (13) et un ou plusieurs tranchants (12a - 12f) qui sont agencés à la périphérie sur le bord de l'ouverture (13), et
- un premier moyen d'entraînement (14) qui est conçu pour entraîner la tête (12) en rotation autour d'un premier axe de rotation (F1) qui traverse l'ouverture (13) ;
le dispositif de filetage à la volée (1) étant conçu pour mettre en oeuvre le procédé de filetage à la volée, dans lequel :
- la pièce à oeuvrer (W) est entraînée au moyen d'une broche de travail (101) du tour (100) en rotation autour de l'axe de la broche de travail (101) alors que la pièce à oeuvrer (W) traverse l'ouverture (13) de la tête (12),
- pour réaliser un mouvement de coupe, la tête (12) est entraînée à l'aide du premier moyen d'entraînement (14) en rotation autour du premier axe de rotation (F1), et
- la pièce à oeuvrer (W) est commandée à l'aide d'un moyen de commande du tour de manière à se déplacer par rapport à la tête (12) en direction (Z) de l'axe de broche,
la vitesse d'avance de la pièce à oeuvrer (W) par rapport à la tête (12) en direction de l'axe de broche et la vitesse de rotation de la pièce à oeuvrer (W) autour de l'axe de broche étant adaptées l'une à l'autre en fonction du filetage à former,
**caractérisé par**
un second moyen d'entraînement (15) qui est conçu pour entraîner la tête (12) en rotation autour d'un second axe de rotation (F2) qui s'étend transversalement au premier axe de rotation (F1) pour aligner un angle entre le premier axe de rotation (F1) et l'axe de broche lorsque le dispositif de filetage à la volée (1) est monté sur le tour (100).

2. Dispositif de filetage à la volée selon la revendication 1, **caractérisé en ce que** le second axe de rotation (F2) s'étend sensiblement perpendiculairement au premier axe de rotation (F1).

3. Dispositif de filetage à la volée selon la revendication 1 ou 2, **caractérisé en ce que** le premier axe de rotation (F1) et le second axe de rotation (F2) se croisent en une point d'intersection commun,

4. Dispositif de filetage à la volée selon la revendication 3, **caractérisé en ce que** ledit un ou lesdits plusieurs tranchants de la tête (12) présentent un alignement de coupe (12a, 12b, 12c) qui est aligné avec le point d'intersection commun du premier axe de rotation (F1) et du second axe de rotation (F2), pour chacun des tranchants (12a, 12b, 12c).

5. Dispositif de filetage à la volée selon l'une des revendications précédentes, **caractérisé par**
un moyen formant interface (16) qui est conçu pour être connecté au moyen de commande (102) du tour (100), le second moyen d'entraînement (15) étant conçu pour être commandé par le moyen de commande (102) du tour via le moyen formant interface (16) connecté ;
un moyen formant interface (16) qui est conçu pour être connecté à un moyen de commande électronique, le second moyen d'entraînement (15) étant conçu pour être commandé par le moyen de commande électronique via le moyen formant interface connecté ; ou
un dispositif de commande électronique, le second moyen d'entraînement étant conçu pour être commandé par le moyen de commande électronique, le moyen de commande électronique du dispositif de filetage à la volée comprenant un moyen formant interface qui est conçu pour être connecté au moyen de commande du tour.

6. Dispositif de filetage à la volée selon la revendication 5, **caractérisé en ce que** le second moyen d'entraînement est conçu pour être commandé par le moyen de commande qui le commande à la base d'une entrée manuelle d'un utilisateur et/ou à la base d'ordres de commande compris dans un programme CNC.

7. Dispositif de filetage à la volée selon l'une des revendications précédentes, **caractérisé en ce que** le second moyen d'entraînement destiné à entraîner la tête (12) en rotation autour du second axe de rotation (F2) comprend un moteur électrique, en particulier un servomoteur.

8. Dispositif de filetage à la volée selon l'une des revendications précédentes, **caractérisé en ce que** le second moyen d'entraînement comprend un moyen de coincement qui est conçu pour arrêter l'angle réglé au moyen du second moyen d'entraînement entre le premier axe de rotation (F1) et l'axe de broche, pendant le procédé de filetage à la volée.

9. Dispositif de filetage à la volée selon l'une des revendications précédentes, **caractérisé en ce que** le second moyen d'entraînement comprend un capteur de position angulaire qui est conçu pour détecter une position angulaire d'un alignement de la tête (12) par rapport à la rotation autour du second axe de rotation.

10. Dispositif de filetage à la volée selon la revendication 9 en combinaison avec la revendication 5, **caractérisé en ce que** le capteur de position angulaire destiné à une régulation du second moyen d'entraînement est conçu pour émettre un signal de sortie, indiquant la position angulaire détectée, au dispositif de commande qui commande le second moyen d'entraînement,

11. Dispositif de filetage à la volée selon l'une des revendications précédentes, **caractérisé en ce que** le second moyen d'entraînement est conçu pour aligner la tête (12) depuis un alignement standard jusqu'à un premier alignement angulaire maximal dans une première direction de rotation autour du second axe de rotation, et pour l'aligner depuis l'alignement standard jusqu'à un second alignement angulaire maximal dans une seconde direction de rotation opposée à la première direction de rotation autour du second axe de rotation, en particulier jusqu'à +15° et -15° par rapport à l'alignement standard.

12. Dispositif de filetage à la volée selon la revendication 11, **caractérisé en ce que** le dispositif de filetage à la volée est susceptible d'être monté sur le tour de telle sorte que le premier axe de rotation (F1) est aligné parallèlement, en particulier coaxialement à l'axe de broche du tour, lors de l'alignement standard de la tête (12).

13. Tour à commande numérique, comportant :
- une broche de travail (101) pour recevoir une pièce à oeuvrer (W) et-pour entraîner la pièce à oeuvrer (W) en rotation autour d'un axe de la broche de travail (101), et
- un dispositif de filetage à la volée (1) selon l'une des revendications précédentes.

14. Tour selon la revendication 13, **caractérisé par** un moyen de commande (102) pour la commande numérique du tour (100) et du dispositif de filetage à la volée (1), le moyen de commande étant conçu pour aligner un angle entre l'axe de broche et le premier axe de rotation (F1) en commandant le second moyen d'entraînement.

15. Tour selon la revendication 14, **caractérisé en ce que** le moyen de commande est conçu pour adapter un angle entre l'axe de broche et le premier axe de rotation (F1) en commandant le second moyen d'entraînement pour compenser une erreur de pas qui apparaît pendant l'usinage de la pièce à cause d'une usure du tranchant ;
le moyen de commande est conçu pour régler un angle entre l'axe de broche et le premier axe de rotation (F1) en commandant le second moyen d'entraînement, après qu'un filetage est réalisé sur une première pièce à oeuvrer et avant de réaliser un filetage avec le même profil de filetage et le même pas de filetage sur une seconde pièce à oeuvrer à la base d'une différence entre les diamètres nominaux de la première et de la seconde pièces à oeuvrer ; et/ou
le moyen de commande est conçu pour régler un angle entre l'axe de broche et le premier axe de rotation (F1) en commandant le second moyen d'entraînement, après qu'un filetage est réalisé sur une première pièce à oeuvrer et avant de réaliser un filetage avec le même profil de filetage sur une seconde pièce à oeuvrer avec le même diamètre nominal à la base d'une différence entre les pas de filetage de la première et de la seconde pièces à oeuvrer.
